# EUROPÄISCHE PATENTSCHRIFT

(11) **EP 2 353 778 B1**
(45) Veröffentlichungstag und Bekanntmachung des Hinweises auf die Patenterteilung: **12.03.2014**
(21) Anmeldenummer: 11152461.7
(22) Anmeldetag: 28.01.2011
(51) Int. Cl.: B23Q 3/155, B23Q 7/00, B65G 1/10

(54) **Regalmagazin**
Storage rack
Cartouche à étages

(30) Priorität: 09.02.2010 DE 102010001724
(43) Veröffentlichungstag der Anmeldung: 10.08.2011
(73) Patentinhaber: Miksch GmbH, 73037 Göppingen (DE)
(72) Erfinder: Miksch, Alexander, 73033, Göppingen (DE)
(74) Vertreter: TBK

(56) Entgegenhaltungen:
- EP-A1- 1 607 174
- FR-A1- 2 584 964
- JP-A- 59 108 622
- JP-A- 2001 150 276

## Beschreibung

Die vorliegende Erfindung bezieht sich auf ein Regalmagazin.

Es sind verschiedene Regalmagazine im Stand der Technik bekannt. Regalmagazine sollen dazu in der Lage sein, eine möglichst breite Vielfalt an Werkzeugen oder ähnlichen Objekten in großer Zahl aufnehmen zu können und bereit zu halten, damit diese bei Bedarf aus dem Regalmagazin entnommen und entsprechend angewendet werden können.

Daher muss ein Regalmagazin in der Lage sein, zum einen viele mitunter sehr verschiedene Werkzeuge oder entsprechende Objekte aufnehmen zu können und andererseits diese relativ schnell dem Nachfragenden zur Verfügung zu stellen. Die Bestückung und Entnahme von Werkzeugen/Objekten in das Regalmagazin und aus diesem heraus ist im Stand der Technik auf verschiedene Weise gelöst worden. Ein Problem hierbei ist im Stand der Technik, dass die Beschickungseinrichtungen/Entnahmeeinrichtungen aufgrund der verschiedenen Größen und Formen der Werkzeuge/Objekte so gebaut sein müssen, dass sie der Handhabung der verschiedenen Größen/Formen entsprechen können. Um daher ein große Flexibilität im Hinblick auf die Handhabbarkeit möglichst vieler Größen/Formen aufzuweisen, ist ein entsprechender Platzbedarf für die Beschickungseinrichtungen/Entnahmeeinrichtungen am Regalmagazin vonnöten.

Die FR 2 584 964 offenbart ein Regalmagazin mit einem Regalgrundgerüst, eine Hubeinheit und einen Roboter als Übergabeeinheit. Insbesondere ist zum Zwecke einer automatisierten Montage das Regalgrundgerüst mit Regalfächern versehen. In Montageteil-Lieferrichtung vor dem Regal ist ein seitlich verschiebbarer Hubtisch angeordnet. In Montageteil-Lieferrichtung nach dem Regal ist ebenfalls ein seitlich verschiebbarer Hubtisch angeordnet. Dem Hubtisch folgt ein Roboter auf dem Gestell, der die Montage der Teile vornimmt. Eine Palettenzuführung mit Paletten, die mit zu montierenden Teilen bestückt sind, geschieht von einer Palettenbeschickungsvorrichtung zum Hubtisch. Ein Palettenabtransport von leeren Paletten geschieht vom Hubtisch zu einer Palettenabgabevorrichtung. Der Roboter auf dem Gestell dient dabei als eine Übergabeeinheit. Der Roboter dient zur Aufnahme des zu montierenden Teiles von der Palette und zur weiteren Handhabung des zu montierenden Teiles. Des Weiteren hat das Regalmagazin als eine Objektaufnahmekonstruktion zwei Streben Positionierelemente in L-Form oder eben die Palette an sich.

Die JP 59-108622 A offenbart ein Regalgrundgerüst mit Regalfächern für Schubladen kann an einen Hubtisch herangefahren werden. Der Hubtisch übernimmt eine Schublade. Ein Roboter entnimmt ein Element aus der auf dem Hubtisch positionierten Schublade. Der Roboter kann das Element auch in die auf dem Hubtisch positionierte Schublade zurücklegen. Das Regalgrundgerüst hat Aufnahmekonstruktionen mit einer runden Vertiefungsform in der Schublade.

Die Aufgabe der vorliegenden Erfindung ist es, den Platzbedarf bei der Beschickung/Entnahme von Werkzeugen an einem Regalmagazin zu ermöglichen

Diese Aufgabe ist durch ein Regalmagazin mit den Merkmalen des Anspruchs 1 gelöst.

Vorteilhafte Weiterbildungen der vorliegenden Erfindung sind in den abhängigen Ansprüchen aufgezeigt.

In einem Regalmagazin mit den Merkmalen des Anspruchs 1 wird ein geringer Platzbedarf für das Gesamtsystem gewährleistet.

In dem Regalmagazin wird ein Werkzeug sicher auf der Aufnahmeeinrichtung gelagert. Außerdem ist die Aufnahme/Abgabe durch die Übergabeeinheit einfach.

In dem Regalmagazin wird eine optimale Packungsdichte für die Werkzeughandhabung ermöglicht.

In dem Regalmagazin ist eine technisch einfache und kostengünstige Verschiebung der Aufnahmeeinrichtung im Regalfach möglich.

In dem Regalmagazin ist eine genaue Ortsbeziehung zwischen Hubeinheit und jeweiligem Regalfach ermöglicht, was ein schnelles und genaues Verschieben der Aufnahmeeinrichtung erlaubt.

In dem Regalmagazin sind die Übergabewege zwischen Hubeinheit und jeweiligem Regalfach, und zwischen Hubeinheit und Übergabeeinheit kurz, was den Platzbedarf für das Gesamtsystem noch stärker verringert.

In dem Regalmagazin ist das Regalmodul in einfacher Weise erweiterbar, so dass durch einfache Massnahmen eine große Anzahl an Werkzeugen verwendbar ist. Außerdem können ganze Regalmodule schnell ausgetauscht werden. Die Rüstzeit verringert sich dadurch vorteilhaft.

Das Regalmagazin sorgt dafür, dass ausgewählte Werkzeuge für eine Arbeitsmaschine schnell zu Verfügung stehen.

In dem Regalmagazin ist ein schnelles und direktes Weitergeben von Werkzeugen zwischen Arbeitsmaschine und Übergabeeinheit möglich.

In dem Regalmagazin sind spezifische Anwendungen der erfindungsgemäßen Lösung möglich.

Die vorliegende Erfindung bietet eine Reihe an Vorteilen.

Durch die vorliegende Erfindung wird für ein Regalmagazin eine optimale Packungsdichte durch entsprechende Gestaltung der Regalmodule erzielt.

Der Platzbedarf für die Werkzeughandhabung ist gering.

Das Regalmagazin ist auf einfache Weise erweiterbar durch einen zweiten Stellplatz für ein weiteres mobiles Regalmodul und / oder durch übereinander erfolgendes Stapeln der Regalmodule.

Ein einfaches und schnelles Rüsten durch Austausch ganzer Regalmodule ist erzielbar.

Ein mehrfaches Nutzen vorhandener Vorschubbewegungen ist möglich (z.B. kann das Ein- und Ausführen des Werkzeugköchers auf den Werkzeugkonus mit dem vorhandenen Achsantrieb der Hubeinheit erfolgen).

Es ist eine einfache Gestaltung der Regalmodule aufgrund geringer Toleranzanforderungen und fehlender eigener Achsantriebe möglich.

Die vorliegende Erfindung ist nachstehend anhand beigefügter Zeichnungen beschrieben, die die Erfindung in beispielartiger Weise veranschaulichen.

### Kurzbeschreibung der Zeichnungen

Figur 1 zeigt eine schematische perspektivische Ansicht eines Regalmagazins gemäß der vorliegenden Erfindung, wobei in Figur 1 der Greifarm einer Übergabeeinheit einen in einem Zwischenspeicher befindlichen Werkzeugköcher ergreift.
Figur 2 zeigt eine Draufsicht auf das Regalmagazin gemäß Figur 1.
Figur 3 zeigt eine schematische perspektivische Ansicht des Regalmagazins gemäß Anspruch 1, wobei der Greifarm der Übergabeeinheit einen Werkzeugköcher ergreift, der ein auf einer Aufnahmeeinrichtung abgelegtes Werkzeug beinhaltet.
Figur 4 zeigt eine schematische Draufsicht auf das Regalmagazin gemäß Figur 3.
Figur 5 zeigt eine weitere schematische perspektivische Ansicht des erfindungsgemäßen Regalmagazins.

### Detaillierte Beschreibung eines Ausführungsbeispiels

Nachstehend ist ein Ausführungsbeispiel der vorliegenden Erfindung beispielartig beschrieben.

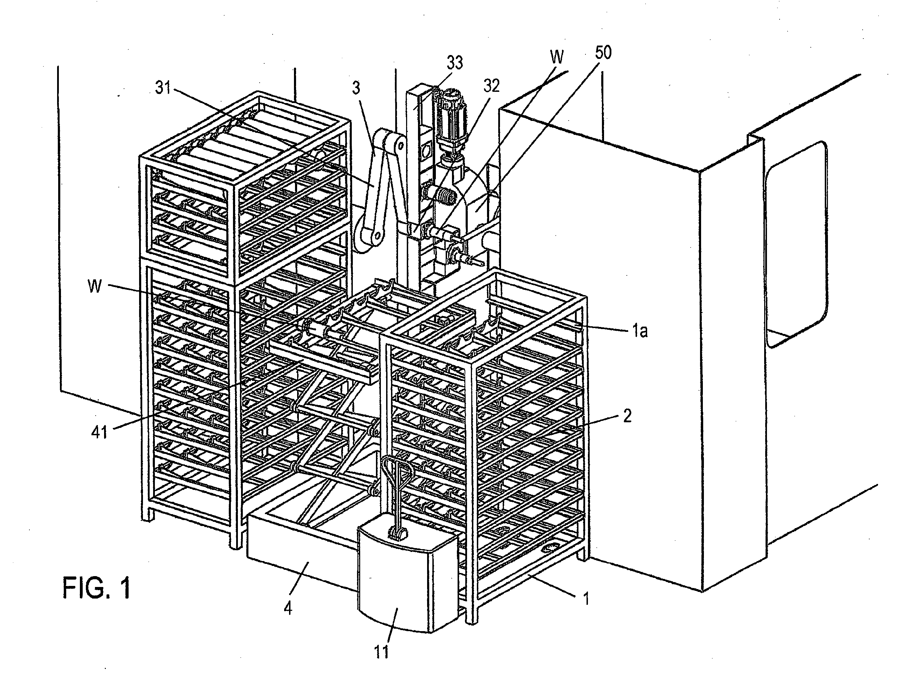

Figur 1 zeigt eine schematische perspektivische Ansicht eines Regalmagazins gemäß der vorliegenden Erfindung, wobei in Figur 1 der Greifarm einer Übergabeeinheit einen in einem Zwischenspeicher befindlichen Werkzeugköcher ergreift.

Wie dies aus Figur 1 entnehmbar ist, weist das Regalmagazin der vorliegenden Erfindung ein bewegliches Regalmodul 1, eine Vielzahl an Aufnahmeeinrichtungen 2 für die Aufnahme von Werkzeugen, eine Übergabeeinheit 3, die die Werkzeuge zum Zwecke der Zwischenlagerung oder Anwendung weiterreicht, und eine Hubeinheit 4 auf.

Das Regalmodul 1 ist gestellartig als ein Regal aufgebaut und weist Regalfächer 1a auf, die als einfache L-förmige Schienen ausgebildet sind. Diese L-förmigen Schienen verlaufen wagerecht derart, dass eine nachstehend beschriebene Aufnahmeeinrichtung 2 auf diesen Schienen in wagerechter Richtung verschiebbar laufen kann. In dem Regalmodul 1 sind dabei die Regalfächer 1a übereinander angeordnet, wie dies aus Figur 1 ersichtlich ist. Um das vertikale Verschieben der Aufnahmeeinrichtung 2 in dem Regalfach 1a zu ermöglichen, sind die L-förmigen Schienen im jeweiligen Regalfach 1a parallel zueinander wie in den Figuren gezeigt so angeordnet, dass die jeweiligen unteren Schenkel der L-Form zueinander zeigen. Der vertikale Abstand der L-förmigen Schienen und somit der Regalfächer 1a im Regalmodul 1 zueinander, d.h. vertikale Höhe jedes Regalfachs, wird entsprechend dem im Regalmodul 1 aufzubewahrenden Werkzeug gewählt. Das heißt, ein relativ großes Werkzeug macht einen relativ großen Abstand der Regalfächer 1a in vertikaler Richtung erforderlich, wohingegen ein relativ kleines Werkzeug einen relativ kurzen Abstand in vertikaler Richtung der Regalfächer 1a gestattet.

Das Regalmodul 1 ist mobil und kann mittels eines in Figur 1 dargestellten Hubwagens 11 mit beispielsweise elektrischem Antrieb bewegt werden. Dabei fährt der Hubwagens 11 mit seinen Hubwagengabeln 12 unter das Regalmodul 1 und hebt das Regalmodul 1 an. Um ein genaues Abstellen des Regalmoduls 1 zu ermöglichen, können am Boden geeignete Positionierhilfen wie zum Beispiel Zapfen oder Leitbleche vorgesehen werden (diese sind nicht dargestellt).

Das Regalmodul 1 gemäß der vorliegenden Erfindung ist so erweiterbar, dass auf dem Regalmodul 1 an der Oberseite Abstützeinrichtungen (nicht dargestellt) vorgesehen sind, die ein Stapeln eines weiteren Regalmodul 1 auf dem Regalmodul 1 ermöglichen, so dass mehrere Regalmodule 1 übereinander positioniert werden können. In Figur 1 ist ein Regalmodul 1 auf der rechten Seite dargestellt, auf dem kein weiteres Regalmodul gestapelt ist. Auf der linken Seite von Figur 1 ist hingegen ein Regalmodul 1 dargestellt, auf dessen Oberseite ein zusätzliches Regalmodul 1 angeordnet ist. Die übereinander angeordneten Regalmodule (wie zum Beispiel auf der linken Seite von Figur 1) können gleichartige oder verschiedenartige Werkzeuge aufbewahren und somit einen zueinander gleichen vertikalen Abstand der Regalfächer 1a oder einen unterschiedlichen vertikalen Abstand der Regalfächer 1a aufweisen. Die jeweils unteren Regalmodule 1 können über Abstellfüße verfügen, wohingegen die auf der Oberseite der unteren Regalmodule 1 gestapelten Regalmodule 1 nicht unbedingt Abstellfüße haben müssen sondern entsprechende Integrationseinrichtungen aufweisen können, die ein sicheres Übereinanderstapeln gestatten. Es können auch drei oder mehr Regalmodule 1 übereinander gestapelt werden.

In den Regalfächern 1 ist jeweils eine Aufnahmeeinrichtung 2 angeordnet, die der Aufnahme von Werkzeugen W dient. Im Ausführungsbeispiel von Figur 1 ist in jedem Regalfach 1a eine Aufnahmeeinrichtung 2 vorgesehen. Jede Aufnahmeeinrichtung 2 ist in wagerechter Richtung relativ zum zugehörigen Regalfach 1a entlang seiner L-förmigen Schienen bewegbar. Jede Aufnahmeeinrichtung 2 weist Werkzeugaufnahmekonstruktionen auf, wobei je nach Größe des Werkzeugs eine Aufnahmeeinrichtung 2 eine einzige Werkzeugaufnahmekonstruktion oder eine Vielzahl an Werkzeugaufnahmekonstruktionen aufweisen kann. Bei besonders großen Werkzeugen weist daher die Aufnahmeeinrichtung 2 lediglich eine Werkzeugaufnahmekonstruktion auf, während bei kleinerer Größe der Werkzeuge eine Aufnahmeeinrichtung 2 der vorliegenden Erfindung mehrere Werkzeugaufnahmekonstruktionen nebeneinander angeordnet aufweisen kann. In dem Beispiel von Figur 1 weist die Aufnahmeeinrichtung 2, die im Regalmodul 1 auf der rechten Seite der Darstellung von Figur 1 angewendet wird, acht nebeneinander angeordnete Werkzeugaufnahmekonstruktionen auf. Die Aufnahmeeinrichtung 2 hat eine Längserstreckung in (wie in Figur 1 dargestellt) Rechteckform, wobei zwei sich gegenüber stehende Querstreben dieser Rechteckform (in Figur 1 die vordere und die hintere Querstrebe) an ihrer Unterseite Laufflächen haben. Diese Laufflächen laufen auf den L-förmigen Schienen der Regalfächer 1a.

Die Werkzeugaufnahmekonstruktionen der jeweiligen Aufnahmeeinrichtungen 2 sind parallel zu den vorstehend beschriebenen Laufflächen an der Unterseite der Aufnahmeeinrichtung 2 ausgebildet. Insbesondere weist jede Werkzeugaufnahmekonstruktion eine Rillenform auf. Diese Rillenform ist an die Form und Größe des jeweiligen in ihr abzulegenden Werkzeugs angepasst. Für die Anwendung besonders schwerer Werkzeuge kann die Aufnahmeeinrichtung zur Erhöhung der Stabilisierung Querverstrebungen aufweisen.

An den einzelnen Modulen ist eine Transportsicherung vorgesehen, die das Herausrutschen der Aufnahmeeinrichtungen 2 beim Transport (aufgrund Schrägstellung, seitlicher Impulse etc.) verhindert.

Die vorliegende Erfindung weist die Hubeinheit 4 auf.

Diese Hubeinheit 4 ist vorzugsweise ortsfest und besteht aus einer Gelenkkonstruktion mit einem Aufnahmetisch 41 an der Oberseite der Hubeinheit 4 und einem Antrieb. Der Antrieb sorgt für ein Ausfahren und Einfahren des Aufnahmetisches 41 in vertikaler Richtung. Die Form des Aufnahmetisches 41 an der Oberseite der Hubeinheit 4 ist daran angepasst, eine Aufnahmeeinrichtung 2 aufzunehmen. Dabei wird die Hubeinheit 4 so ausgefahren/eingefahren, dass ihr Aufnahmetisch 41 zu der entsprechenden Aufnahmeeinrichtung 2 im entsprechenden Regalfach 1a ausgerichtet ist. Der Aufnahmetisch 41 der Hubeinheit 4 weist daher im vorliegenden Ausführungsbeispiel eine Rechteckform auf, die der Rechteckform der Aufnahmeeinrichtung 2 entspricht. Der Aufnahmetisch 41 der Hubeinheit 4 weist an seiner Oberseite Aufnahmeflächen auf, die so ausgebildet sind, dass jeweilige Laufflächen, die an der Unterseite der Aufnahmeeinrichtung 2 wie vorstehend beschrieben ausgebildet sind, laufen können.

Somit kann jede Aufnahmeeinrichtung 2 im Regalfach 1a und auf den Laufflächen des Aufnahmetischs 41 der Hubeinheit 4 bewegt werden. Idealerweise wird dabei die Aufnahmeeinrichtung 2 durch einen Antrieb, der der Hubeinheit 4 zugeordnet ist, bewegt. Sinnvollerweise kann der Antrieb die Module auf beiden Seiten der Hubeinheit 4 bedienen. Dadurch wird erreicht, dass die einzelnen Regalmodule sehr einfach ausgeführt werden können. In besonderen Fällen ist es jedoch auch denkbar, dass der Antrieb auch dem Modul zugeordnet ist.

Als zusätzliche Begrenzung weist der Aufnahmetisch 41 der Hubeinheit 4 Begrenzungswände auf, zwischen denen die Aufnahmeeinrichtung 2 laufen kann. Genauer gesagt, erstrecken sich die Begrenzungswände des Aufnahmetisches 41 der Hubeinheit benachbart zu den oberen Laufflächen des Aufnahmetisches 41 an deren Außenseite (in Fig. 1 die vordere und die hintere Seite), so dass eine auf den oberen Laufflächen des Aufnahmetisches 41 sich wagerecht bewegende Aufnahmeeinrichtung 2 zwischen diesen Begrenzungswänden läuft.

Die Hubeinheit 4 selbst kann auf verschiedene Weise ausgeführt sein. Im vorliegenden Ausführungsbeispiel von Figur 1 nutzt die Hubeinheit 4 den Zieharmonikaeffekt mittels Gelenkkonstruktion. Es können auch andere Konstruktionsarten gewählt werden, solange ein Ausfahren und Einfahren des Aufnahmetisches 41 in vertikaler Richtung und ein Anhalten des Aufnahmetisches 41 an Übergabepositionen, die an dem jeweiligen Regalfach 1a ausgerichtet sind, möglich ist.

Die vorliegende Erfindung weist des weiteren die Übergabeeinheit 3 auf. Die Übergabeeinheit 3 dient dazu, ein Werkzeug W, das sich auf der an der Oberseite der Hubeinheit 4 angeordneten Aufnahmeeinrichtung 2 befindet, zu entnehmen und an einem Aufbewahrungsort abzulagern, oder von dem Aufbewahrungsort zu entnehmen und auf der Aufnahmeeinrichtung 2 abzulagern. Die Übergabeeinheit 3 des vorliegenden Ausführungsbeispiels kann beispielsweise mit einem Werkzeugwechsler versehen sein. Ein solcher Werkzeugwechsler hat einen Werkzeugablageort in einem vertikal verschiebbaren Zwischenspeicher für ein Werkzeug, das von einem das Werkzeug ergreifenden Greifer entnommen und an eine Werkzeugmaschine übergeben wird. Der Werkzeugablageort im Zwischenspeicher ist als Halterung ausgebildet, der einen Werkzeugköcher (Aufnahmetopf) aufnimmt, in dem das Werkzeug sitzt. Dabei wird das Werkzeug mitsamt dem Werkzeugköcher von dem Zwischenspeicher aufgenommen und übergeben.

Wie vorstehend beschrieben, kann die Übergabeeinheit 3 des vorliegenden Ausführungsbeispiels als Aufbewahrungsort den vertikal verschiebbaren Zwischenspeicher 33 aufweisen, wie dies in Figur 1 dargestellt ist. In diesem Zwischenspeicher 33 befinden sich Aufnahmenuten für die Aufnahme eines jeweiligen Werkzeugköchers 32. Ein Werkzeugköcher 32 ist ein Werkzeugaufnahmetopf zur Aufnahme eines Werkzeugs W. Jeder Werkzeugköcher 32 hat eine Innenform wie beispielsweise einen Innenkonus, der einer am Werkzeug ausgebildeten Konusform entspricht. Das Werkzeug wiederum besitzt den entsprechend ausgebildeten Aussenkonus, mittels dem es in die Werkzeugmaschine (in eine Spindel oder ein anderes Gegenstück) eingesetzt werden kann.

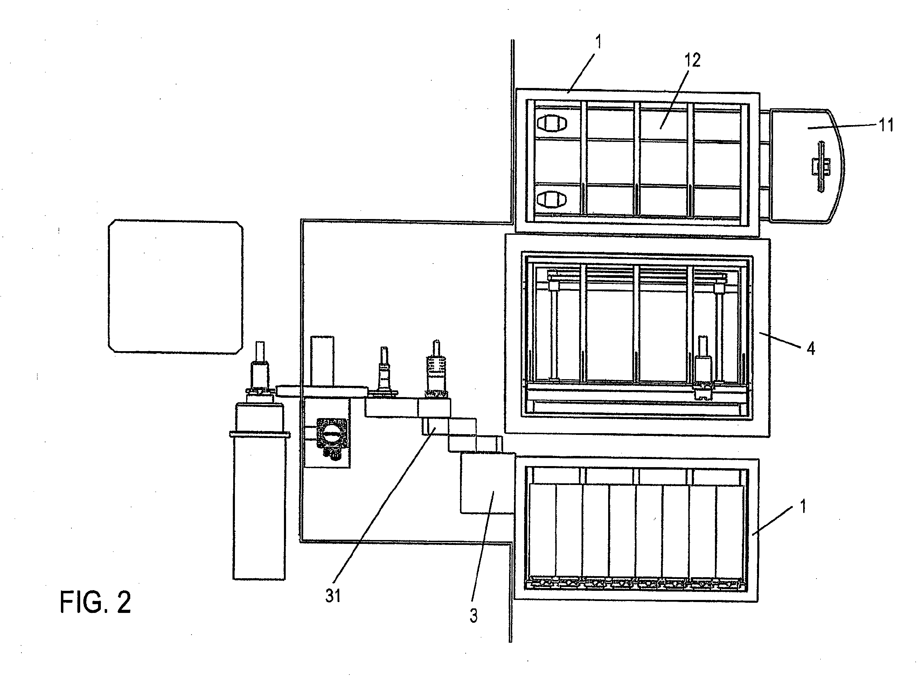

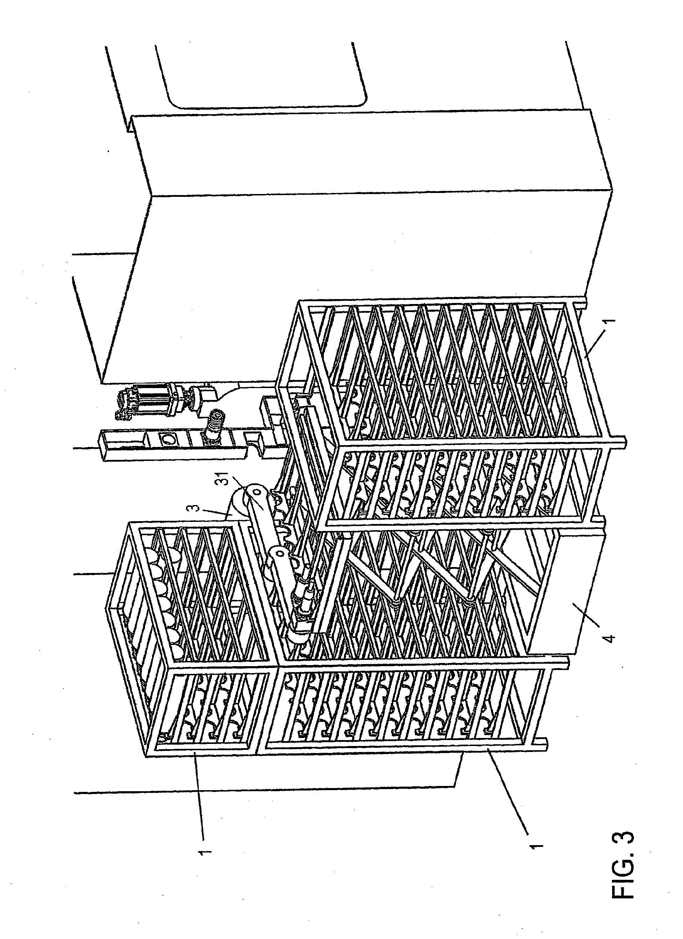

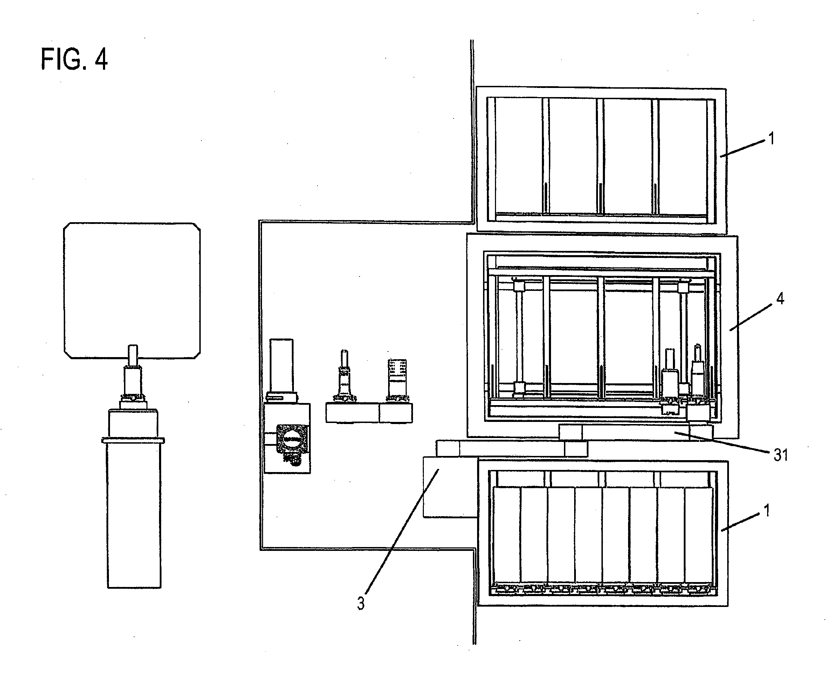

Die Übergabeeinheit 3 weist einen Greifarm 31 auf. Der Greifarm 31 ist als Gelenkkonstruktion aufgebaut und kann sowohl auf die jeweilige Aufnahmenut des Zwischenspeichers 33 (siehe Fig. 1 und Fig. 2) als auch auf die jeweiligen Werkzeuge W auf der auf dem Aufnahmetisch 41 befindlichen Aufnahmeeinrichtung 2 zugreifen, wenn der Aufnahmetisch 41 in der Vertikalposition angeordnet ist, die eine Übergabe von Aufnahmetisch 41 zu Greifarm 31 erlaubt. Der Greifarm 31 kann in der Position, in der er maximal gestreckt ist, das Werkzeug W in der Aufnahmeform auf dem Aufnahmetisch 41 ergreifen, die am weitesten von der Übergabeeinheit 3 entfernt ist, wie dies in Fig. 3 und Fig. 4 dargestellt ist.

Daher kann der Greifarm 31 einen Werkzeugköcher 32 samt dem darin befindlichen Werkzeug W ergreifen und beide als eine Einheit zu dem Zwischenspeicher 33 übergeben und dort in der jeweiligen Aufnahmenut ablagern.

Nachstehend ist die Funktionsweise des vorliegenden Ausführungsbeispiels beschrieben.

### 1. Verbringen des Regalmoduls 1 zur Hubeinheit 4

Das Regalmodul 1, in welchem sich in den jeweiligen Regalfächern 1a Aufnahmeeinrichtungen 2 befinden, in denen wiederum Werkzeuge W aufbewahrt sind, wird so an die Seite der Hubeinheit 4 geschoben, dass bei Abstellen des Regalmoduls 1 die Aufnahmeinrichtungen 2 aus den Regalfächern 1a ausfahren können und auf den Aufnahmetisch 41 der Hubeinheit 4 gelangen können, wenn der Aufnahmetisch 41 der Hubeinheit 4 in der entsprechenden Höhenposition des in Frage kommenden Regalfachs 1a bewegt wird.

### 2. Übergabe der Aufnahmeeinrichtung 2 aus Regalmodul 1 zu Hubeinheit 4

Dann fährt die Hubeinheit 4 so aus bzw. ein, dass ihr Aufnahmetisch 41 an dem Regalfach 1a ausgerichtet ist, dessen Aufnahmeeinrichtung 2 ein Werkzeug W in die Übergabeeinheit 3 übergeben soll. Dabei sind die Laufflächen an der Oberseite des Aufnahmetischs 41 der Hubeinheit 4 zu den Laufflächen des Regalfachs 1a (L-förmige Schienen) ausgerichtet, das heißt, sie bilden entsprechende Verlängerungen zueinander. Dann wird die Aufnahmeeinrichtung 2 aus dem Regalfach 1a zu dem Aufnahmetisch 41 der Hubeinheit 4 geschoben, wobei die Aufnahmeeinrichtung 2 durch die Begrenzungswände an dem Aufnahmetisch 41 der Hubeinheit 4 geführt wird. Wenn die Aufnahmeeinrichtung 2 an der Bewegungsstopperposition auf dem Aufnahmetisch 41 der Hubeinheit 4 angelangt ist, endet ihre waagerechte Laufbewegung.

### 3. Übernahme des Werkzeug W von Hubeinheit 4 durch Übergabeeinheit 3

Nun wird der Aufnahmetisch 41 der Hubeinheit 4 zu der Übergabeposition verschoben, an der der Greifarm 31 mittels Werkzeugköcher 32 das Werkzeug W aufnimmt.

Wenn der Aufnahmetisch 41 der Hubeinheit 4 seine Übergabeposition erreicht hat, wird der mit dem Werkzeugköcher 32 ausgestattete Greifarm 31 der Übergabeeinheit 3 zu dem Werkzeug W, welches aus der Aufnahmeeinrichtung 2 entnommen werden soll, ausgefahren, wie dies in den Figuren 1 und 2 gezeigt ist. Dann nimmt der am Greifarm 31 angeordnete Werkzeugköcher 32 das Werkzeug W auf, beispielsweise durch eine waagerechte Bewegung der Hubeinheit in Werkzeuglängsachse. Für diese Bewegung kann auch prinzipiell der gleiche Antrieb wie zum Herausfahren der Aufnahmeeinrichtung 2 genutzt werden. Sofern für nachfolgende Operationen ohnehin eine Axialbewegung notwendig sein sollte, könnte diese Bewegung auch von einer nachgelagerten Komponente (Übergabeeinheit, Roboter etc.) ausgeführt werden.

Daraufhin schwenkt der Greifarm 31 zu dem Zwischenspeicher 33 derart, dass der Werkzeugköcher, in dem nunmehr das aufgenommene Werkzeug W sitzt, in eine Aufnahmenut des Zwischenspeichers 33 abgelegt wird, wie dies in den Figuren 3 und 4 gezeigt ist. Um die Bewegung des Greifarms 31 nicht zu behindern, kann die Hubeinheit 4 abgesenkt werden. Anschließend kann das im Zwischenspeicher 33 abgelegte Werkzeug W von der Arbeitsmaschine 50 verwendet werden.

Der vorstehend dargelegte Ablauf kann auch in entgegengesetzter Weise ausgeführt werden, das heißt, aus dem Zwischenspeicher 33 kann mittels Greifarm 31 und Werkzeugköcher 32 ein Werkzeug entnommen und auf einer Aufnahmeeinrichtung 2 positioniert werden, die auf dem Aufnahmetisch 41 der Hubeinheit 4 angeordnet worden ist.

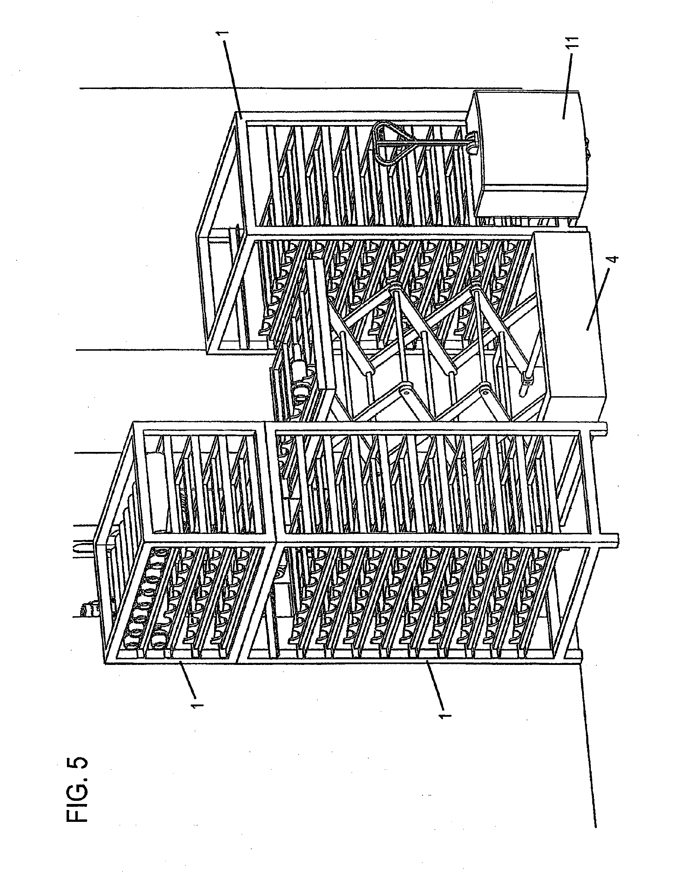

Figur 5 zeigt eine weitere schematische perspektivische Ansicht des erfindungsgemäßen Regalmagazins, in der die Arbeitsposition von Fig. 1 und Fig. 2 unter einem anderen Blickwinkel dargestellt ist, um das Verständnis der Erfindung zu erleichtern.

### Abwandlungen des Ausführungsbeispiels

Das vorstehend anhand der Zeichnungen beschriebene Ausführungsbeispiel gibt die Idee der vorliegenden Erfindung lediglich beispielartig wieder. Die vorliegende Erfindung ist nicht auf das Ausführungsbeispiel allein beschränkt. Beispielsweise kann die vorliegende Erfindung in folgender Weise abgewandelt werden.

Im vorstehend beschriebenen Ausführungsbeispiel ist das Regalmodul 1 mobil. Die Erfindung ist auch auf den Fall anwendbar, bei dem zumindest ein Regalmodul fixiert ist. Ausserdem ist das gesamte Prinzip ist theoretisch auch um 90° gedreht denkbar (nach dem Prinzip eines Apothekerschranks), wobei im Regalmodul eine Vielzahl an nebeneinander angeordneter Regalfächer vorhanden sind.

Im vorstehend beschriebenen Ausführungsbeispiel wird das Regalmodul 1 durch einen Elektrohubwagen 11 befördert. Der Hubwagen 11 kann natürlich auch anderweitig angetrieben werden. Als Alternative ist außerdem vorstellbar, dass das Regalmodul 1 einen eigenen Antrieb aufweist und mit Rädern versehen ist. Als weitere Alternative ist vorstellbar, dass das Regalmodul 1 Räder aufweist und mittels externem Antrieb (z.B. sogar manuell) bewegt werden kann. Vorzugsweise sollten die Räder dann einen Arretiermechanismus ausweisen, um eine Relativbewegung des abgestellten Regalmoduls zur Hubeinheit zu vermeiden.

Im vorstehend beschriebenen Ausführungsbeispiel ist die Hubeinheit ortsfest am Boden verankert. Die Hubeinheit kann auch am Maschinengestell der Maschine verankert sein.

In vorliegendem Ausführungsbeispiel übergibt der Greifarm der Übergabeeinheit 3 das Werkzeug W an einen Zwischenspeicher 33. Als Alternative kann die Übergabeeinheit 3 ein Werkzeug W auch direkt zu einem Werkzeugwechsler übergeben. Als weitere Alternative kann die Übergabeeinheit 3 ein Werkzeug W auch direkt zu einer Arbeitsmaschine 50 übergeben.

Gemäß der Erfindung weisen die Werkzeugaufnahmekonstruktionen der jeweiligen Aufnahmeeinrichtungen 2 eine Rillenform auf, die an die Form und Größe des jeweiligen in ihr abzulegenden Werkzeugs angepasst ist. Die Aufnahme der Objekte ist auf die Rillenform (Greiferrille) beschränkt.

### Bezugszeichenliste

- 1: Regalmodul
- 1a: Regalfach
- 2: Aufnahmeeinrichtung
- 3: Übergabeeinheit
- 4: Hubeinheit
- 11: Elektrohubwagen
- 12: Hubwagengabel
- 31: Greifarm
- 32: Werkzeugköcher
- 33: Zwischenspeicher
- 41: Aufnahmetisch
- 50: Arbeitsmaschine
- W: Werkzeug

## Patentansprüche

1. Regalmagazin zum Speichern und Übergeben von Werkzeugen zur Verwendung in einer Werkzeugmaschine mit
- zumindest einem Regalgrundgerüst (1) mit einer Vielzahl an Regalfächern (1a),
- einer Vielzahl an jeweils seitlich in ein Regalfach (1a) einschiebbare Aufnahmeeinrichtungen (2),
wobei jedem Regalfach (1a) eine seitlich einschiebbare Aufnahmeeinrichtung (2) zuweisbar ist, und wobei jede Aufnahmeeinrichtung (2) mindestens eine Werkzeugaufnahmekonstruktion in einer Rillenform, die an die Form und Größe eines abzulegenden Werkzeugs (W) angepasst ist, für die sichere Ablage des Werkzeugs (W) aufweist; wobei die Rillenform der Werkzeugaufnahmekonstruktion an eine Greiferrille des abzulegenden Werkzeugs (W) angepasst ist;
- einer Hubeinheit (4) zur Aufnahme einer aus dem Regalfach (1a) herausgeschobenen Aufnahmeeinrichtung (2) und zum vertikalen Versetzen der Aufnahmeeinrichtung (2); und
- einer Übergabeeinheit (3), die das Werkzeug (W) von der Aufnahmeeinrichtung (2) aufnimmt, das Werkzeug (W) zu der Aufnahmeeinrichtung (2) abgibt und der weiteren Handhabung des Werkzeugs (W) in einer Werkzeugmaschine dient.

2. Regalmagazin gemäß Anspruch 1, wobei
jede Aufnahmeeinrichtung (2) eine Werkzeugaufnahmekonstruktion für je ein Werkzeug (W) aufweist, wobei die Werkzeugaufnahmekonstruktion an das Werkzeug (W) derart angepasst ist, dass sie das auf ihr abgelegte Werkzeug (W) abstützen kann, und
die Aufnahmeeinrichtung (2) in das Regalfach (1a) seitlich horizontal einschiebbar ist.

3. Regalmagazin gemäß Anspruch 2, wobei
das Regalmagazin verschiedene seitlich einschiebbare Aufnahmeeinrichtungen (2) mit jeweils einer oder mehreren Werkzeugaufnahmekonstruktionen aufweist, von denen
zumindest eine Aufnahmeeinrichtung (2) mehrere Werkzeugaufnahmekonstruktionen in Schieberichtung der Aufnahmeeinrichtung (2) nebeneinander angeordnet derart aufweist, dass sie mehrere Werkzeuge (W) benachbart aufnehmen kann.

4. Regalmagazin gemäß einem der Ansprüche 2 und 3, wobei
Größe und zueinander gebildeter Abstand der Werkzeugaufnahmekonstruktion(en) der Aufnahmeeinrichtung (2) an ein jeweiliges abzulagerndes Werkzeug (W) derart angepasst sind, dass möglichst viele Werkzeuge (W) in Reihe auf einer Aufnahmeeinrichtung (2) lagerbar sind.

5. Regalmagazin gemäß einem der Ansprüche 1 bis 4, wobei
im Regalgrundgerüst (1) die Vielzahl an Regalfächern (1a) nebeneinander oder vertikal übereinander angeordnet sind, und
die vertikale Höhe jedes Regalfachs (1a) an jeweils die maximale Größe des Werkzeugs (W) anpassbar ist, das auf der diesem Regalfach (1a) zugewiesenen Aufnahmeeinrichtung (2) abgelagert wird.

6. Regalmagazin gemäß einem der Ansprüche 1 bis 5, wobei
jedes Regalfach (1a) Schienen aufweist, auf denen die Aufnahmeeinrichtung (2) bewegbar ist.

7. Regalmagazin gemäß einem der Ansprüche 1 bis 6, wobei
die Hubeinheit (4) die Aufnahmeeinrichtung (2) vertikal versetzt, ortsfest am Boden oder am Maschinengestell einer die Werkzeuge (W) handhabenden Maschine verankert ist und am Boden neben der Hubeinheit (4) Positionierhilfen für ein genaues Positionieren des Regalgrundgerüsts (1) vorgesehen sind.

8. Regalmagazin gemäß einem der Ansprüche 1 bis 7, wobei
die Hubeinheit (4) einen Aufnahmetisch (41) zur Aufnahme der Aufnahmeeinrichtung (2) in horizontal sich erstreckender Rechteckform mit Längsseiten, denen gegenüber das Regalgrundgerüst (1) positionierbar ist, und Querseiten aufweist, wobei im Bereich jenseits einer Querseite die Übergabeeinheit (3) angeordnet ist.

9. Regalmagazin gemäß Anspruch 8, wobei
an beiden Längsseiten Regalgrundgerüste (1) positionierbar sind.

10. Regalmagazin gemäß einem der Ansprüche 1 bis 9, wobei
das Regalgrundgerüst (1) vertikal erweiterbar derart ist, dass auf ein Regalgrundgerüst (1) zumindest ein weiteres Regalgrundgerüst (1) stapelbar ist.

11. Regalmagazin gemäß einem der Ansprüche 1 bis 10, wobei
die Übergabeeinheit (3) mit einem Zwischenspeicher (33) gekoppelt ist, in dem das Werkzeug (W) vor einer weiteren Handhabung lagerbar ist.

12. Regalmagazin gemäß einem der Ansprüche 1 bis 10, wobei
die Übergabeeinheit (3) mit einer Werkzeugmaschine (50) direkt gekoppelt ist, die das Werkzeug (W) von der Übergabeeinheit (3) aufnehmen, handhaben und wieder an die Übergabeeinheit (3) abgeben kann.

13. Regalmagazin gemäß einem der Ansprüche 1 - 12, wobei das Regalgrundgerüst (1) mobil oder fix ist.

14. Verwendung eines Regalmagazins gemäß einem der Ansprüche 1 - 13 mit einer Werkzeugmaschine (50), wobei die Übergabeeinheit (3) das Werkzeug (W) zu der Werkzeugmaschine (50) mit oder ohne Zwischenspeichern in einem Zwischenspeicher (33) übergibt und das Werkzeug (W) von der Werkzeugmaschine (50) mit oder ohne Zwischenspeichern in einem Zwischenspeicher (33) übernimmt.

## Claims

1. A storage rack for storing and transferring tools to be used in a machine tool, comprising
- at least one rack module (1) including a plurality of shelves (1a),
- a plurality of receiving means (2) each being laterally insertable into a respective shelf (1a),
wherein one laterally insertable receiving means (2) is assignable to each shelf (1a), and wherein each of the receiving means (2) comprises at least one tool receiver having a groove shape adapted to a shape and size of a tool (W) to be deposited in the tool receiver, for a secure deposition of the tool (W);
wherein the groove shape of the tool receiver is adapted to a gripping groove of the tool (W) to be deposited;
- a lifting unit (4) for receiving one of the receiving means (2) removed from a shelf (1a), and for vertically displacing the receiving means (2); and
- a transfer unit (3) for receipt of the tool (W) from the receiving means (2), for delivery of the tool (W) to the receiving means (2), and for further handling of the tool (W) in a machine tool.

2. A storage rack according to claim 1, wherein
each receiving means (2) has a tool receiver for each respective tool (W), the tool receiver being adapted to the tool (W) such that the tool receiver is able to support the tool (W) laid upon the tool receiver, and
the receiving means (2) is laterally insertable horizontally into the shelf (1a).

3. A storage rack according to claim 2, wherein
the storage rack comprises different laterally insertable receiving means (2) having one or more tool receivers, respectively, from which
at least one of the receiving means (2) has plural tool receivers juxtaposed in a shifting direction of the receiving means (2) such that the receiving means can receive plural tools (W) wherein the plural tools are adjacent to each other.

4. A storage rack according to claim 2 or 3, wherein
a size of the tool receiver(s) of the receiving means (2) and a distance of the tool receivers of the receiving means from each other are adapted to the respective tool (W) to be deposited so that many tools (W) can be deposited in a row on the receiving means (2).

5. A storage rack according to one of the claims 1 to 4, wherein
in the rack module (1) the plurality of shelves (1a) are juxtaposed or vertically superimposed, and
a vertical height of each shelf (1a) is adaptable to a respective maximum size of the tool (W) stored on the receiving means (2) assigned to said shelf (1a).

6. A storage rack according to one of the claims 1 to 5, wherein
each shelf (1a) comprises rails on which the receiving means (2) is movable.

7. A storage rack according to one of the claims 1 to 6, wherein
the lifting unit (4) vertically displaces the receiving means (2), is fixedly anchored on the floor or at a machine frame of a machine handling the tools (W), and positioning aids for positioning the rack module (1) are provided at a bottom beside the lifting unit (4).

8. A storage rack according to one of the claims 1 to 7, wherein
the lifting unit (4) comprises a receiving table (41) for receiving the receiving means (2) in a horizontally extending rectangular shape having longitudinal sides opposed to which the rack module (1) can be positioned and transverse sides, wherein the transfer unit (3) is arranged in an area beyond a transverse side.

9. A storage rack according to claim 8, wherein
at both longitudinal sides rack modules (1) can be positioned.

10. A storage rack according to one of the claims 1 to 9, wherein
the rack module (1) can be vertically extended such that at least one further rack module (1) is adapted to be stacked onto the rack module (1).

11. A storage rack according to one of the claims 1 to 10, wherein
the transfer unit (3) is coupled to an intermediate storage (33) in which the tool (W) can be stored before the tool is further handled.

12. A storage rack according to one of the claims 1 to 10, wherein
the transfer unit (3) is directly coupled to a machine tool (50) adapted to receive the tool (W) from the transfer unit (3), handle the tool and return the tool to the transfer unit (3).

13. A storage rack according to one of the claims 1 to 12, wherein
the rack module (1) is mobile or fixed.

14. Use of a storage rack according to one of the claims 1 to 13 with a machine tool (50), wherein the transfer unit (3) transfers the tool (W) to the machine tool (50) with or without an intermediate storing thereof in an intermediate storage (33), and takes over the tool (W) from the machine tool (50) with or without an intermediate storing thereof in an intermediate storage (33).

## Revendications

1. Magasin à rayonnages pour le stockage et le transfert d'outils destinés à être utilisés dans une machine-outil, avec
- au moins une structure d'étagère de base (1) avec une pluralité de compartiments d'étagère (1a),
- une pluralité de dispositifs de réception (2) respectivement insérables latéralement dans un compartiment d'étagère (1a),
un dispositif de réception (2) insérable latéralement pouvant être associé à chaque compartiment d'étagère (1a), et chaque dispositif de réception (2) comportant au moins une construction de réception d'outil en forme de rainure adaptée à la forme et aux dimensions d'un outil (W) à déposer, pour un dépôt sûr de l'outil (W) ; la forme de rainure de la construction de réception d'outil étant ajustée à une gorge de préhension de l'outil (W) à déposer ;
- une unité de levage (4) pour la réception d'un dispositif de réception (2) retiré du compartiment d'étagère (1a) et pour le déplacement vertical du dispositif de réception (2) ; et
- une unité de transfert (3) qui reçoit l'outil (W) du dispositif de réception (2), remet l'outil (W) au dispositif de réception (2) et sert à la manipulation consécutive de l'outil (W) dans une machine-outil.

2. Magasin à rayonnages selon la revendication 1, où chaque dispositif de réception (2) comporte une construction de réception d'outil pour chaque outil (W), ladite construction de réception d'outil étant adaptée à l'outil (W) de manière à pouvoir soutenir l'outil (W) déposé sur elle, et
le dispositif de réception (2) étant insérable latéralement en position horizontale dans le compartiment d'étagère (1a).

3. Magasin à rayonnages selon la revendication 2, où ledit magasin à rayonnages comporte différents dispositifs de réception (2) insérables latéralement ayant chacun une ou plusieurs constructions de réception d'outil, dont
au moins un dispositif de réception (2) comporte plusieurs constructions de réception d'outil disposées côte à côte dans la direction d'insertion du dispositif de réception (2), de manière à pouvoir recevoir plusieurs outils (W) contigus.

4. Magasin à rayonnages selon l'une des revendications 2 et 3, où
les dimensions de la ou des constructions de réception d'outil du dispositif de réception (2) et l'espacement formé entre celle(s)-ci et un outil (W) respectif à entreposer sont adaptées de manière à pouvoir entreposer autant d'outils (W) que possible en ligne sur un dispositif de réception (2).

5. Magasin à rayonnages selon l'une des revendications 1 à 4, où
les plusieurs compartiments d'étagère (1a) sont disposés côte à côte ou sont verticalement superposés dans la structure d'étagère de base (1), et
la hauteur verticale de chaque compartiment d'étagère (1a) est ajustable aux dimensions maximales de l'outil (W) entreposé sur le dispositif de réception (2) associé audit compartiment d'étagère (1a).

6. Magasin à rayonnages selon l'une des revendications 1 à 5, où
chaque compartiment d'étagère (1a) comporte des rails sur lesquels le dispositif de réception (2) est mobile.

7. Magasin à rayonnages selon l'une des revendications 1 à 6, où
l'unité de levage (4) déplace verticalement le dispositif de réception (2), est ancrée fixement au sol ou sur le bâti d'une machine de manipulation des outils (W), et où des aides au positionnement sont prévues au sol à côté de l'unité de levage (4) pour une mise en place précise de la structure d'étagère de base (1).

8. Magasin à rayonnages selon l'une des revendications 1 à 7, où
l'unité de levage (4) comporte une table de réception (41) pour le logement du dispositif de réception (2), de forme rectangulaire s'étendant horizontalement avec des longueurs à l'opposé desquelles la structure d'étagère de base (1) peut être mise en place, et des côtés transversaux, l'unité de transfert (3) étant disposée dans la zone au-delà d'un côté transversal.

9. Magasin à rayonnages selon la revendication 8, où
des structures d'étagère de base (1) peuvent être mises en place sur les deux longueurs.

10. Magasin à rayonnages selon l'une des revendications 1 à 9, où
la structure d'étagère de base (1) est extensible verticalement, de manière à pouvoir empiler au moins une autre structure d'étagère de base (1) sur une structure d'étagère de base (1).

11. Magasin à rayonnages selon l'une des revendications 1 à 10,
où l'unité de transfert (3) est accouplée à un stockage provisoire (33) où l'outil (W) peut être entreposé avant une autre manipulation.

12. Magasin à rayonnages selon l'une des revendications 1 à 10, où
l'unité de transfert (3) est directement accouplée à une machine de travail (50) pouvant recevoir l'outil (W) de l'unité de transfert (3), le manipuler et le restituer à l'unité de transfert (3).

13. Magasin à rayonnages selon l'une des revendications 1 à 12, où
la structure d'étagère de base (1) est fixe ou mobile.

14. Utilisation d'un magasin à rayonnages selon l'une des revendications 1 à 13 avec une machine-outil (50), l'unité de transfert (3) transférant l'outil (W) à la machine-outil (50) avec ou sans entreposage intermédiaire dans un stockage provisoire (33), et reprenant l'outil (W) de la machine-outil (50) avec ou sans entreposage intermédiaire dans un stockage provisoire (33).
